# NEUE EUROPÄISCHE PATENTSCHRIFT

(11) **EP 3 795 825 B2**
(45) Veröffentlichungstag und Bekanntmachung des Hinweises auf die Entscheidung über den Einspruch: **24.07.2024**
(45) Hinweis auf die Patenterteilung: 17.11.2021
(21) Anmeldenummer: 19198723.9
(22) Anmeldetag: 20.09.2019
(51) Int. Cl.: F03D 80/80, F03D 15/00, H01B 17/58, F16H 57/029

(54) **GETRIEBEANORDNUNG FÜR EINE WINDKRAFTANLAGE MIT ELEKTRISCH ISOLIERTEMDURCHFÜHRUNGSROHR**
GEAR BOX ARRANGEMENT FOR WIND TURBINE WITH INSULATED FEED-THROUGH PIPE
ENSEMBLE DE TRANSMISSION POUR ÉOLIENNE AVEC TUBE DE TRAVERSÉE ISOLÉ

(43) Veröffentlichungstag der Anmeldung: 24.03.2021
(73) Patentinhaber: ZF Friedrichshafen AG, 88046 Friedrichshafen (DE); ZF Wind Power Antwerpen NV, 3920 Lommel (BE); Vestas Wind Systems A/S, 8200 Aarhus N (DK)
(72) Erfinder: De Laet, Wim, 2000 Antwerpen (BE); Rottiers, Stijn, 9160 Lokeren (BE)

(56) Entgegenhaltungen:
- EP-A1- 2 541 058
- EP-A1- 3 001 062
- CN-U- 207 161 276
- DE-A1- 102014 200 674
- DE-A1- 102014 200 674
- JP-A- S5 467 162
- US-A- 6 019 292

## Beschreibung

Die Erfindung betrifft eine Anordnung nach dem Oberbegriff von Anspruch 1.

Bei Windkraftanlagen ist ein Trend hin zu integrierten Antriebssträngen zu verzeichnen. Bei einem integrierten Antriebsstrang bilden das Getriebe und der Generator eine bauliche Einheit. Dies zieht Probleme mit Streuströmen nach sich. Die Streuströme können in Form von hochfrequenten Wechselströmen oder niederfrequenten Gleich- oder Wechselströmen auftreten. Es besteht die Gefahr, dass an Verzahnungen und Wälzlagern durch Spannungsüberschläge Schäden auftreten.

Um Folgeschäden aufgrund von Streuströmen zu vermeiden, müssen geeignete Maßnahmen zur Isolierung getroffen werden. Bei mittelschnell laufenden Antriebssträngen sind allerdings die zu übertragenden Drehmomente zwischen Getriebe und Generator vergleichsweise hoch. Gleichzeitig mangelt es aufgrund der integrierten Bauweise des Antriebsstrangs zwischen Getriebe und Generator an verfügbarem Bauraum. Dies erschwert eine ausreichende Dimensionierung der drehmomentübertragenden Bauteile. Dies betrifft insbesondere die elektrische Isolierung der drehmomentübertragenden Bauteile. Die Patentanmeldungen EP 2 541 058 A1 (Anordnung für eine Windkraftanlage), DE 10 2014 200674 A1 (Fixiermittel für ein Durchführungsrohr einer Windkraftanlage) und EP 3 001 062 (elektrisch isolierende Überlastkupplung für eine Windkraftanlage) zeigen den Stand der Technik.

Der Erfindung liegt die Aufgabe zugrunde, eine gegenüber den aus dem Stand der Technik bekannten Getrieben verbesserte Lösung verfügbar zu machen. Insbesondere sollen Schäden, die in einem integrierten Antriebsstrang aufgrund von Streuströmen auftreten können, vermieden werden.

Diese Aufgabe wird gelöst durch eine Anordnung nach Anspruch 1. Bevorzugte Weiterbildungen sind in den Unteransprüchen enthalten.

Bei dem Getriebe handelt es sich um ein Getriebe für eine Windkraftanlage. Ein Durchführungsrohr, auch Pitch Tube genannt, ist ein Rohr zum Durchführen von, etwa elektrischen oder hydraulischen Versorgungsleitungen durch das Getriebe. Es zeichnet sich dadurch aus, dass es durch das Getriebe bzw. das Gehäuse des Getriebes hindurchführt und seine Mündungen außerhalb des Getriebes bzw. des Gehäuses des Getriebes angeordnet sind. Gegenüber dem Gehäuse des Getriebes ist das Durchführungsrohr bevorzugt schmierstoffundurchlässig abgedichtet.

Das Durchführungsrohr ist mittels des Fixiermittels in dem Getriebe, das heißt in mindestens einer Komponente des Getriebes fixiert. Das Durchführungsrohr ist gewöhnlich rotationssymmetrisch ausgestaltet. Entsprechend ist das Fixiermittel bevorzugt ebenso rotationssymmetrisch.

Die Erfindung basiert auf der Erkenntnis, dass das Durchführungsrohr aufgrund des Umstands, dass es vollständig durch das Getriebe hindurchführt, ein maßgeblicher Überträger von Streuströmen ist. Erfindungsgemäß besteht daher das Fixiermittel aus einem elektrischen Nichtleiter, etwa aus Polyamid. Das Fixiermittel isoliert also das Durchführungsrohr und die Komponente des Getriebes, in der das Durchführungsrohr mittels des Fixiermittels fixiert ist, elektrisch voneinander. Dadurch wird ein Hauptverursacher von Kriechströmen eliminiert. Die Erfindung verhindert wirkungsvoll, dass von einem Generator ausgehende Kriechströme über das Durchführungsrohr in das Getriebe eingeleitet werden. Die erfindungsgemäße Isolierung ist besonders für integrierte Antriebsstränge geeignet, da sie nur wenig Bauraum beansprucht.

Das Durchführungsrohr ist relativ zu dem Fixiermittel axial, d.h. in Richtung einer Drehachse, etwa einer Drehachse der Komponente, in der das Durchführungsrohr mittels des Fixiermittels fixiert ist, unbeweglich weitergebildet. Entsprechend ist das Fixiermittel bevorzugt axial unbeweglich in dem Getriebe bzw. in der genannten Komponente fixiert.

In einer bevorzugten Weiterbildung handelt es sich bei der Komponente des Getriebes, in der das Durchführungsrohr mittels des Fixiermittels fixiert ist, um eine Welle, insbesondere eine Hohlwelle, oder einen drehbar gelagerten Planetenträger. Das Fixiermittel isoliert weiterbildungsgemäß das Durchführungsrohr gegenüber der Welle oder dem Planetenträger elektrisch.

In einer darüber hinaus bevorzugten Weiterbildung weist das Fixiermittel ein durchgehendes Loch auf. Das Loch ist zentrisch ausgerichtet, das heißt seine Mittelachse stimmt mit einer Mittelachse des Durchführungsrohrs überein. Insbesondere können das Durchführungsrohr und das Loch rotationssymmetrisch sein. In diesem Fall stimmen eine Symmetrieachse des Durchführungsrohrs und eine Symmetrieachse des Lochs überein. Das Durchführungsrohr verläuft durch das Loch hindurch und ist dort mit dem Fixiermittel verfügt.

Entlang seines radial äußeren Randes ist das Fixiermittel in einer bevorzugten Weiterbildung mit der Komponente des Getriebes, in der das Durchführungsrohr fixiert ist, bzw. mit der Welle oder dem Planetenträger verfügt.

Bevorzugt ist das Fixiermittel derart weitergebildet, dass es die Grundform einer radial ausgerichteten Scheibe hat. Die Grundform eines Körpers bezeichnet die Form eines ursprünglichen Körpers, aus dem der erstgenannte Körper durch Eliminieren einzelner Bereiche, etwa durch Einfügen von Aussparungen, und/oder durch Hinzufügen einzelner Bereiche entsteht.

Um das Durchführungsrohr fluiddicht gegenüber einem Gehäuse des Getriebes abzudichten, ist eine Dichtung vorgesehen. Diese ist von dem Fixiermittel axial beabstandet. Insbesondere können die Dichtung und das Fixiermittel an gegenüberliegenden Wandungen des Getriebegehäuses angeordnet sein. Das Durchführungsrohr ist in der Dichtung bzw. relativ zu der Dichtung axial verschiebbar. Dadurch ist gewähleistet, dass Längenänderungen des Durchführungsrohrs bedingt durch Temperaturschwankungen ausgeglichen werden.

Ausführungsbeispiele der Erfindung sind in den Figuren dargestellt. Übereinstimmende Bezugsziffern kennzeichnen dabei gleiche oder funktionsgleiche Merkmale. Im Einzelnen zeigt:
- Fig. 1: ein Fixiermittel aus Polyamid; und
- Fig. 2: eine Dichtung aus Polyamid;

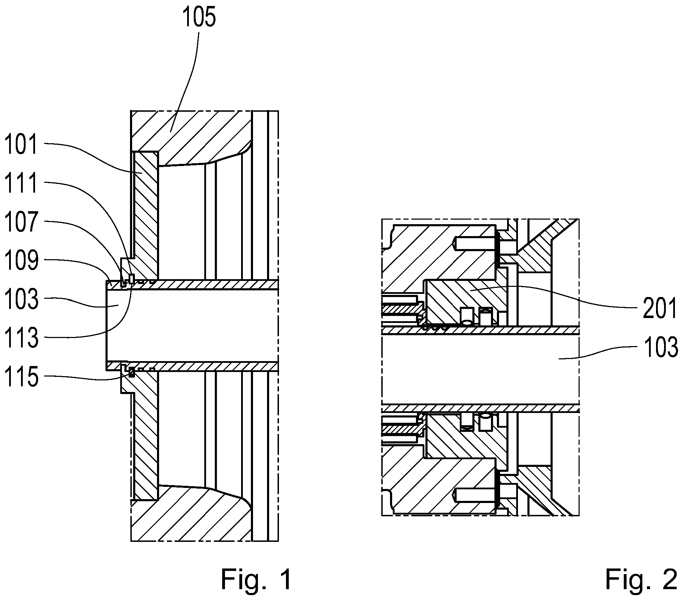

Das in Fig. 1 dargestellte Fixiermittel 101 dient dazu, ein Durchführungsrohr 103 antriebsseitig in einem Planetenträger 105 zu fixieren. Durch das Fixiermittel 101 wird die radiale Position des Durchführungsrohrs 103 festgelegt.

Das Fixiermittel 101 weist Nasen 107 auf, die radial nach innen hin erstrecken und in entsprechende Aussparungen 109 des Durchführungsrohrs 103 eingreifen. Dadurch kommt eine drehfeste Verbindung zwischen dem Fixiermittel 101 und dem Durchführungsrohr 103 zustande. Ferner weist das Fixiermittel eine Nut 111 auf, die in Umfangsrichtung um das Durchführungsrohr 103 herum verläuft und nach innen hin geöffnet ist. Das Durchführungsrohrs 103 weist eine entsprechende Nut 111 auf. Beide Nuten 111, 113 sind mit ihren Öffnungen aufeinander zu gerichtet, sodass sie gemeinsam einen Sicherungsring 115 aufnehmen können. Durch den Sicherungsring 115 kommt eine axiale Fixierung zwischen dem Fixiermittel 101 und dem Durchführungsrohr 103 zustande.

Das Fixiermittel 101 ist starr in dem Planetenträger 105 fixiert, das heißt eine Fixierung zwischen dem Fixiermittel 101 und dem Planetenträger 105 lässt keinerlei Relativbewegungen zwischen dem Fixiermittel 101 und dem Planetenträger 105 zu.

Das Fixiermittel 101 besteht aus einem elektrischen Isolator. Als elektrischer Isolator kommt in dem hier beschriebenen Ausführungsbeispiel Polyamid zum Einsatz.

Wie in Fig. 2 dargestellt, ist generatorseitig eine Labyrinthdichtung 201 vorgesehen, die ebenfalls aus einem Isolator, hier aus Polyamid, besteht. Die Labyrinthdichtung 201 dichtet zum einen das Durchführungsrohr 103 gegenüber dem Austritt von Getriebeöl ab und gewährleistet zum anderen eine elektrische Isolierung.

### Bezugszeichen

- 101: Fixiermittel
- 103: Durchführungsrohr
- 105: Planetenträger
- 107: Nase
- 109: Aussparung
- 111: Nut
- 113: Nut
- 115: Sicherungsring
- 201: Labyrinthdichtung

## Patentansprüche

1. Anordnung mit einem Getriebe für eine Windkraftanlage, einem Durchführungsrohr (103) zum Durchführen von Versorgungsleitungen durch das Getriebe, einem Fixiermittel (101) und einer axial von dem Fixiermittel (101) beabstandeten Dichtung (201); wobei
das Durchführungsrohr (103) durch ein Gehäuse des Getriebes hindurchführt und seine Mündungen außerhalb des Gehäuses angeordnet sind; wobei
das Durchführungsrohr (103) mittels des Fixiermittels (101) in mindestens einer Komponente (105) des Getriebes fixiert ist; **dadurch gekennzeichnet, dass**
das Fixiermittel (101) aus einem elektrischen Nichtleiter besteht; wobei
das Durchführungsrohr (103) in dem Fixiermittel axial unbeweglich fixiert ist; wobei
das Durchführungsrohr (103) mittels der Dichtung (201) fluiddicht gegenüber dem Gehäuse des Getriebes abgedichtet ist; und wobei
das Durchführungsrohr (103) relativ zu der Dichtung (201) axial verschiebbar ist.

2. Anordnung nach Anspruch 1; **dadurch gekennzeichnet, dass**
es sich bei der Komponente (105) um eine Welle oder einen drehbar gelagerten Planetenträger handelt.

3. Anordnung nach einem der vorhergehenden Ansprüche; **dadurch gekennzeichnet, dass**
das Fixiermittel (101) ein zentrisches, durchgehendes Loch aufweist; wobei
das Fixiermittel (101) in dem Loch mit dem Durchführungsrohr (103) gefügt ist.

4. Anordnung nach dem vorhergehenden Anspruch unter Rückbezug auf Anspruch 2; **dadurch gekennzeichnet, dass**
das Fixiermittel (101) entlang seines radial äußeren Randes mit der Welle oder dem Planetenträger (105) verfügt ist.

5. Anordnung nach einem der vorhergehenden Ansprüche; **dadurch gekennzeichnet, dass**
das Fixiermittel (101) die Grundform einer radial ausgerichteten Scheibe hat.

## Claims

1. Arrangement having a transmission for a wind turbine, having a feed-through pipe (103) for feeding supply lines through the transmission, having a fixing means (101) and having a seal (201) which is spaced apart axially from the fixing means (101), wherein
the feed-through pipe (103) leads through a housing of the transmission and its openings are arranged outside the housing, wherein
the feed-through pipe (103) is fixed by means of the fixing means (101) in at least one component (105) of the transmission, **characterized in that**
the fixing means (101) consists of an electrical non-conductor, wherein
the feed-through pipe (103) is fixed so as to be axially immovable in the fixing means, wherein
the feed-through pipe (103) is sealed off in a fluid-tight manner with respect to the housing of the transmission by means of the seal (201), and wherein
the feed-through pipe (103) is displaceable axially relative to the seal (201).

2. Arrangement according to Claim 1, **characterized in that**
the component (105) is a shaft or a rotatably mounted planet carrier.

3. Arrangement according to either of the preceding claims, **characterized in that**
the fixing means (101) has a central through-hole, wherein
the fixing means (101) is joined to the feed-through pipe (103) in the hole.

4. Arrangement according to the preceding claim where referred back to Claim 2, **characterized in that** the fixing means (101) is joined along its radially outer edge to the shaft or to the planet carrier (105) .

5. Arrangement according to one of the preceding claims, **characterized in that**
the fixing means (101) has the basic shape of a radially oriented disc.

## Revendications

1. Ensemble comprenant une transmission destinée à une éolienne, un tube de passage (103) destiné à guider les conduites d'alimentation à travers la transmission, un moyen de fixation (101) et une garniture d'étanchéité (201) espacée axialement du moyen de fixation (101) ;
le tube de passage (103) traversant un boîtier de la transmission et ses embouchures étant disposés à l'extérieur du boîtier ;
le tube de passage (103) étant fixé dans au moins un composant (105) de la transmission à l'aide du moyen de fixation (101) ; **caractérisé en ce que**
le moyen de fixation (101) comprend un non-conducteur électrique;
le tube de passage (103) étant fixé de manière immobile axialement dans le moyen de fixation ;
le tube de passage (103) étant scellé de manière étanche aux fluides par rapport au boîtier de la transmission au moyen de la garniture d'étanchéité (201) ; et
le tube de passage (103) pouvant coulisser axialement par rapport à la garniture d'étanchéité (201).

2. Ensemble selon la revendication 1 ; **caractérisé en ce que**
le composant (105) est un arbre ou un porte-satellites monté de manière rotative.

3. Ensemble selon l'une des revendications précédentes ; **caractérisé en ce que**
le moyen de fixation (101) comporte un trou traversant central ; le moyen de fixation (101) étant relié dans le trou au tube de passage (103).

4. Ensemble selon la revendication précédente en référence à la revendication 2 ; **caractérisé en ce que**
le moyen de fixation (101) est assemblé à l'arbre ou au porte-satellites (105) le long de son bord radialement extérieur.

5. Ensemble selon l'une des revendications précédentes ; **caractérisé en ce que**
le moyen de fixation (101) a la forme de base d'un disque orienté radialement.
